# EUROPÄISCHE PATENTSCHRIFT

(11) **EP 1 206 868 B1**
(45) Veröffentlichungstag und Bekanntmachung des Hinweises auf die Patenterteilung: **16.03.2005**
(21) Anmeldenummer: 00954639.1
(22) Anmeldetag: 18.08.2000
(51) Int. Cl.: H04L 29/12, G05B 19/418

(54) **VERFAHREN ZUM KONFIGURIEREN EINES SICHEREN BUSTEILNEHMERS UND SICHERES STEUERUNGSSYSTEM MIT EINEM SOLCHEN**
METHOD OF CONFIGURING A SAFE STATION AND A SAFE CONTROL SYSTEM USING THE SAME
PROCEDE DE CONFIGURATION D'UN NOEUD SUR ET SYSTEME DE COMMANDE SUR COMPORTANT UN TEL NOEUD

(30) Priorität: 23.08.1999 DE 19939919; 27.08.1999 DE 19940874
(43) Veröffentlichungstag der Anmeldung: 22.05.2002
(73) Patentinhaber: PILZ GmbH & CO., 73760 Ostfildern (DE)
(72) Erfinder: RUPP, Roland, D-73110 Hattenhofen (DE); WOHNHAAS, Klaus, D-70736 Fellbach (DE); SCHWENKEL, Hans, D-70192 Stuttgart (DE)
(74) Vertreter: Duhme, Torsten
(86) Internationale Anmeldenummer: PCT/EP2000/008062
(87) Internationale Veröffentlichungsnummer: WO 2001/015385

(56) Entgegenhaltungen:
- EP-A- 0 173 905
- EP-A- 0 905 594

## Beschreibung

Die vorliegende Erfindung betrifft ein Verfahren zum Konfigurieren eines sicheren Busteilnehmers beim Anschließen an einen Feldbus in einem sicheren Steuerungssystem, wobei dem sicheren Busteilnehmer eine definierte Teilnehmeradresse zugeordnet wird.

Die Erfindung betrifft darüber hinaus auch ein Steuerungssystem zum sicheren Steuern von sicherheitskritischen Prozessen, mit zumindest einem sicheren Busteilnehmer, der an einen Feldbus angeschlossen ist, wobei der sichere Busteilnehmer erste Mittel zum Aufnehmen und Auswerten eines Bustelegramms sowie einen Speicher zum Speichern einer dem Busteilnehmer zugeordneten Teilnehmeradresse aufweist.

Ein derartiges Verfahren bzw. ein derartiges Steuerungssystem sind aufgrund ihrer Verwendung beim Steuern von sicherheitskritischen Prozessen bekannt.

Bei einem Feldbus handelt es sich um ein System zur Datenkommunikation, bei dem die angeschlossenen Busteilnehmer über eine Sammelleitung miteinander verbunden sind. Daher können zwei an den Feldbus angeschlossene Busteilnehmer miteinander kommunizieren, ohne individuell direkt miteinander verkabelt zu sein. Beispiele für bekannte Feldbusse sind der sogenannte CAN-Bus, der sogenannte Profibus und der sogenannte Interbus.

Im Bereich der Steuer- und Automatisierungstechnik ist die Verwendung von Feldbussen bereits seit längerem hinreichend bekannt. Dies gilt jedoch nicht für die Steuerung von sicherheitskritischen Prozessen, bei denen in der Praxis bis in die jüngste Vergangenheit hinein die an der Steuerung beteiligten Einheiten individuell miteinander verkabelt wurden. Grund hierfür ist, daß die bekannten Feldbusse die zur Steuerung von sicherheitskritischen Prozessen erforderliche Fehlersicherheit (Fehlerwahrscheinlichkeit kleiner als 10⁻¹¹) nicht gewährleisten konnten. Zwar besitzen alle bekannten Feldbusse Maßnahmen zur Fehlersicherung bei der Datenübertragung, diese Maßnahmen sind jedoch nicht ausreichend, um die geforderte Fehlersicherheit zu gewährleisten. Hinzu kommt, daß Feldbusse offene Systeme sind, an die grundsätzlich beliebige Einheiten angeschlossen werden können. Dabei besteht die Gefahr, daß eine Einheit, die mit einem zu steuernden sicherheitskritischen Prozeß gar nichts zu tun hat, diesen ungewollt beeinflußt.

Unter einem sicherheitskritischen Prozeß wird hier ein Prozeß verstanden, von dem bei Auftreten eines Fehlers eine nicht akzeptable Gefahr für Menschen oder materielle Güter ausgeht. Bei einem sicherheitskritischen Prozeß muß daher mit im Idealfall 100%iger Sicherheit gewährleistet sein, daß der Prozeß bei Auftreten eines Fehlers in einen sicheren Zustand überführt wird. Dies kann bei einer Maschinenanlage beinhalten, daß die Anlage abgeschaltet wird. Bei einem chemischen Produktionsprozeß könnte ein Abschalten jedoch unter Umständen eine unkontrollierte Reaktion hervorrufen, so daß in einem solchen Fall der Prozeß besser in einen unkritischen Parameterbereich gefahren wird.

Sicherheitskritische Prozesse können auch Teilprozesse von größeren, übergeordneten Gesamtprozessen sein. Bei einer hydraulischen Presse kann bspw. die Materialzuführung ein nichtsicherheitskritischer Teilprozeß, das Inbetriebnehmen des Preßwerkzeugs dagegen ein sicherheitskritischer Teilprozeß sein. Weitere Beispiele für sicherheitskritische (Teil-)Prozesse sind die Überwachung von Schutzgittern, Schutztüren oder Lichtschranken, die Steuerung von Zwei-Hand-Schaltern oder die Überwachung und Auswertung eines Not-Aus-Schalters.

Die an der Steuerung eines sicherheitskritischen Prozesses beteiligten Einheiten müssen über ihre eigentliche Funktion hinausgehende, sicherheitsbezogene Einrichtungen aufweisen, um von den zuständigen Aufsichtsbehörden für sicherheitskritische Aufgaben zugelassen zu werden. Diese Einrichtungen dienen vor allem der Fehler- und Funktionsüberwachung. In der Regel sind die beteiligten Einheiten redundant aufgebaut, um eine sichere Funktion auch bei Auftreten eines Fehlers zu gewährleisten. Einheiten mit derartigen sicherheitsbezogenen Einrichtungen werden nachfolgend im Unterschied zu "normalen" Einheiten als. sicher bezeichnet.

Die an den Feldbus angeschlossenen Einheiten werden nachfolgend allgemein als Busteilnehmer bezeichnet. Bei einem Steuerungssystem zum sicheren Steuern von sicherheitskritischen Prozessen handelt es sich bei den Busteilnehmern üblicherweise entweder um Steuerungseinheiten oder um Signaleinheiten. Als Steuerungseinheit wird dabei ein Busteilnehmer bezeichnet, der eine gewisse Intelligenz zur Steuerung eines Prozesses besitzt. In der Fachterminologie werden derartige Busteilnehmer üblicherweise als Clients bezeichnet. Sie erhalten Daten und/oder Signale, die Zustandsgrößen der gesteuerten Prozesse repräsentieren, und aktivieren in Abhängigkeit von diesen Informationen Aktoren, die den zu steuernden Prozeß beeinflussen. Üblicherweise ist die Intelligenz in Form eines veränderbaren Anwenderprogramms in einem Speicher der Steuerungseinheiten abgelegt. In der Regel werden als Steuerungseinheiten sogenannte SPS (Speicher Programmierbare Steuerungen) verwendet.

Eine Signaleinheit ist demgegenüber ein Busteilnehmer, der im wesentlichen Ein- und Ausgangskanäle (E/A-Kanäle) bereitstellt, an die einerseits Sensoren zur Aufnahme von Prozeßgrößen und andererseits Aktoren angeschlossen werden können. Die Signaleinheiten besitzen in der Regel keine Intelligenz in Form eines veränderbaren Anwenderprogramms. Sie werden in der Fachterminologie üblicherweise als Server bezeichnet.

Bei vielen Feldbussen, wie etwa dem CAN-Bus, ist es bekannt, den einzelnen Busteilnehmern eine individuelle Teilnehmeradresse zuzuordnen. Die Teilnehmeradresse dient dazu, Bustelegramme mit zu übertragenden Nachrichten gezielt von dem sendenden Busteilnehmer zu dem empfangenden Busteilnehmer zu übermitteln. Beim Aufbau eines Steuerungssystems zum Steuern von sicherheitskritischen Prozessen stellt die Vergabe der Teilnehmeradressen an die Busteilnehmer eine sicherheitskritische Maßnahme dar. Wenn nämlich bspw. zwei verschiedene Signaleinheiten die Zustandsdaten von zwei verschiedenen Schutzgittern aufnehmen und an die Steuerungseinheit weitergeben, kann eine falsche Adreßzuordnung der beiden Signaleinheiten dazu führen, daß die Steuerungseinheit die Bewegung einer abzusichernden Maschine nicht abschaltet, obwohl das entsprechende Schutzgitter geöffnet wurde.

Bei den bisher bekannten, gattungsgemäßen Steuerungssystemen bzw. den entsprechenden Verfahren zum Konfigurieren der sicheren Busteilnehmer werden die Teilnehmeradressen direkt am Busteilnehmer eingestellt. Hierzu weist jeder Busteilnehmer entweder einen mechanischen Codierschalter, insbesondere einen Drehschalter, oder eine serielle Programmierschnittstelle auf. Ein Nachteil dieser Lösung ist, daß das Einstellen der Teilnehmeradressen hier direkt am Ort des einzelnen Busteilnehmers erfolgen muß. Bei komplexen Prozeßsteuerungen im industriellen Bereich können die einzelnen an den Feldbus angeschlossenen Busteilnehmer jedoch bis zu mehreren hundert Metern auseinanderliegen. Beim Aufbau eines sicheren Steuerungssystems sind in diesem Fall daher große Laufwege erforderlich, die das Einrichten und Konfigurieren umständlich machen.

Hinzu kommt, daß es aufgrund der großen Laufwege in diesem Fall leicht möglich ist, den Überblick zu verlieren, was zu fehlerhaften Adreßzuordnungen führen kann. Ein weiterer wesentlicher Nachteil der bekannten Lösungen ist, daß beim Austausch eines defekten Busteilnehmers dessen Teilnehmeradresse bekannt sein muß, damit diese anschließend dem Austausch-Busteilnehmer zugeordnet werden kann. Bei industriellen Anlagen, die häufig rund um die Uhr betrieben werden, bedeutet dies, daß immer entsprechend fachkundiges Personal verfügbar sein muß, um den Austausch eines defekten Busteilnehmers vorzunehmen. In dem Fall, daß dem Busteilnehmer die Teilnehmeradresse mit Hilfe eines Programmiergerätes über die serielle Schnittstelle zugeordnet wird, ist auch stets das entsprechende Programmiergerät erforderlich.

Bei der Zuordnung einer Teilnehmeradresse über eine Programmierschnittstelle besteht darüber hinaus der Nachteil, daß die dem Busteilnehmer zugeordnete Teilnehmeradresse von außen nicht zu erkennen ist. Hierdurch besteht die Gefahr, daß ein Busteilnehmer, der früher einmal mit einer anderen Teilnehmeradresse verwendet wurde, bei seiner Verwendung in einer neuen Umgebung versehentlich mit seiner alten Teilnehmeradresse betrieben wird. Dieses Risiko ist besonders groß, wenn ein schon einmal verwendeter Busteilnehmer im Rahmen einer Wartung in ein anderes Steuerungssystem integriert werden soll.

Aus der EP 0 817 423 A1 ist ein Verfahren zum Konfigurieren eines Bussystems bekannt, wobei es sich in diesem Fall jedoch nicht um ein sicheres Bussystem im Sinne der vorliegenden Erfindung handelt. Es handelt sich hierbei vielmehr um ein Bussystem zur Steuerung von Komponenten in Hausbereichen, wie beispielsweise Licht, Rolläden oder Heizung. Eine versehentlich falsche Adresszuordnung könnte hier möglicherweise zwar einen unerwünschten Steuerungsvorgang auslösen. Ein solcher Fehler ist jedoch nicht sicherheitskritisch und läßt sich leicht beheben, sobald er erkannt ist.

Bei dem Verfahren gemäß EP 0 817 423 A wird den Busteilnehmern eine Adresse zugeordnet. Die Adresse wird dem Busteilnehmer dabei von einer zentralen Konfigurationseinheit zugewiesen, nachdem sich der Busteilnehmer mit einer Identifikationsnachricht bei der Konfigurationseinheit angemeldet hat. Der Busteilnehmer erzeugt die Identifikationsnachricht jeweils dann, wenn ein am Busteilnehmer angeordneter Schalter von einer Bedienperson betätigt wird.

Aus der EP 0 905 594 A1 ist ein sicheres Bussystem im Sinne der vorliegenden Erfindung bekannt. Dabei handelt es sich in diesem Fall um ein Bussystem auf der Basis des sogenannten Interbus-S, der im industriellen Bereich als Standardsystem bekannt ist. Der Interbus arbeitet im Gegensatz zu vielen anderen Bussystemen in der Art eines großen Schieberegisters, bei dem die Busteilnehmer ringförmig miteinander verbunden sind und die einzelnen Speicherplätze des Schieberegisters bilden. Aufgrund dieser besonderen Struktur benötigt der Interbus keine Teilnehmeradressen. Es ist daher grundsätzlich auch nicht erforderlich, den Busteilnehmern eine Adresse von außen zuzuweisen. Dementsprechend ist eine Vergabe von Teilnehmeradressen in der EP 0 905 594 A1 nicht offenbart.

Es ist vor diesem Hintergrund Aufgabe der vorliegenden Erfindung, ein Verfahren der eingangs genannten Art anzugeben, mit dem einem sicheren Busteilnehmer von einer zentralen Stelle aus auf einfache und gleichzeitig fehlersichere Art und Weise eine Teilnehmeradresse zugeordnet werden kann. Es ist darüber hinaus Aufgabe der Erfindung, ein entsprechendes Steuerungssystem anzugeben.

Diese Aufgabe wird durch ein Verfahren der eingangs genannten Art gelöst, das folgende Schritte aufweist:
- Versenden eines ersten Anmeldetelegramms von dem sicheren Busteilnehmer zu einer an den Feldbus angeschlossenen Verwaltungseinheit, wobei das erste Anmeldetelegramm eine festgelegte Universaladresse beinhaltet,
- Versenden eines Adreßvergabetelegramms von der Verwaltungseinheit an den sicheren Busteilnehmer, wobei das Adreßvergabetelegramm die definierte Teilnehmeradresse beinhaltet und
- Abspeichern der definierten Teilnehmeradresse in einem Speicher des sicheren Busteilnehmers,
- wobei der sichere Busteilnehmer das erste Anmeldetelegramm nach dem Empfang eines definierten Wartungstelegramms an die Verwaltungseinheit versendet.

Die Aufgabe wird des weiteren durch ein Steuerungssystem der eingangs genannten Art gelöst, bei dem der Busteilnehmer zweite Mittel aufweist, um sich unter einer festgelegten Universaladresse bei einer an den Feldbus angeschlossenen Verwaltungseinheit anzumelden, sowie dritte Mittel, um ein Adreßvergabetelegramm mit der Teilnehmeradresse aufzunehmen und auszuwerten, wobei die ersten und zweiten Mittel derart ausgebildet sind, daß der sichere Busteilnehmer ein Anmeldetelegramm mit der festgelegten Universaladresse erst nach Empfang eines definierten Wartungstelegramms versendet.

Mit dem genannten Verfahren ist es möglich, den zu konfigurierenden Busteilnehmer zunächst ohne Zuordnung der individuellen Teilnehmeradresse an den Feldbus anzuschließen. Aufgrund der festgelegten Universaladresse kann sich dieser Busteilnehmer anschließend bei der genannten Verwaltungseinheit anmelden. Die Verwaltungseinheit ist bevorzugt eine zentrale Verwaltungseinheit für das gesamte Steuerungssystem. Im nächsten Schritt wird dem zu konfigurierenden Busteilnehmer.von der Verwaltungseinheit die individuelle Teilnehmeradresse übermittelt. Dies geschieht mit Hilfe eines speziellen Adreßvergabetelegramms, das die Verwaltungseinheit an den zu konfigurierenden Busteilnehmer versendet. Der angesprochene Busteilnehmer wertet das empfangene Adreßvergabetelegramm aus, indem er die übermittelte Teilnehmeradresse extrahiert und anschließend in einem Speicher abspeichert. Bevorzugt speichert er die Teilnehmeradresse dabei in einem nicht-flüchtigen Speicher, wie bspw. einem EEPROM.

Mit Hilfe dieses Verfahrens ist es möglich, dem sicheren Busteilnehmer von einer zentralen Stelle aus, nämlich der Verwaltungseinheit, die definierte Teilnehmeradresse zuzuordnen. Bei einem räumlich ausgedehnten Steuerungssystem entfallen daher die bisher erforderlichen, langen Laufwege. Darüber hinaus wird durch die Möglichkeit, sämtliche Busteilnehmer von einer zentralen Stelle aus zu konfigurieren, der Überblick erleichtert und so das Fehlerrisiko einer versehentlich falschen Adreßvergabe verringert. Da zudem sowohl der sichere Busteilnehmer als auch die Verwaltungseinheit sicherheitsbezogene Einrichtungen aufweisen, kann die Übertragung der definierten Teilnehmeradresse trotz der an sich bestehenden Fehlermöglichkeiten des Bussystems auf fehlersichere Weise erfolgen.

Aufgrund der Maßnahme, daß der sichere Busteilnehmer das erste Anmeldetelegramm erst nach Empfang eines definierten Wartungstelegramms an die Verwaltungseinheit versendet, ergibt sich ferner der Vorteil, daß die Verwaltungseinheit stets die Kontrolle über das Geschehen am Feldbus behält. Es ist hiernach ausgeschlossen, daß sich ein neuer, zu konfigurierender Busteilnehmer von sich aus in das Geschehen am Feldbus einmischt, ohne hierzu von der Verwaltungseinheit eine Freigabe erhalten zu haben. Auch hierdurch wird die Sicherheit des Steuerungssystems verbessert, da eine zentrale Kontrolle gewährleistet ist.

Die genannte Aufgabe ist daher vollständig gelöst.

In einer Ausgestaltung des Verfahrens versendet der sichere Busteilnehmer nach Empfang des Adreßvergabetelegramms ein zweites Anmeldetelegramm an die Verwaltungseinheit, wobei das zweite Anmeldetelegramm die definierte Teilnehmeradresse beinhaltet.

Diese Maßnahme besitzt den Vorteil, daß die Verwaltungseinheit überprüfen kann, ob der sichere Busteilnehmer die zugeordnete Teilnehmeradresse nicht nur fehlerfrei empfangen, sondern auch fehlerfrei verarbeitet hat. Hierdurch wird die Sicherheit der Adreßzuordnung nochmals erhöht. Anschaulich gesprochen bedeutet die genannte Maßnahme, daß sich der sichere Busteilnehmer nach Erhalt der ihm zugeordneten Teilnehmeradresse ein zweites Mal bei der Verwaltungseinheit anmeldet. Die Maßnahme besitzt darüber hinaus den weiteren Vorteil, daß aus Sicht der Verwaltungseinheit die Universaladresse eindeutig wieder freigegeben ist. Somit steht sie einem anderen Busteilnehmer zur Benutzung zur Verfügung, ohne daß es zu Mehrdeutigkeiten hinsichtlich des betroffenen Busteilnehmers kommen kann.

In einer bevorzugten Ausgestaltung dieser Maßnahme versendet der sichere Busteilnehmer das erste Anmeldetelegramm nur nach dem erstmaligen Empfang des definierten Wartungstelegramms an die Verwaltungseinheit, während er bei einem wiederholten Empfang des definierten Wartungstelegramms das zweite Anmeldetelegramm versendet.

Diese Maßnahme besitzt den Vorteil, daß das Wartungstelegramm als sogenanntes Broadcast-Telegramm jeweils gleichzeitig an alle an den Feldbus angeschlossenen Busteilnehmer gemeinsam versendet werden kann. Hierdurch vereinfacht sich das erfindungsgemäße Verfahren, da die Anmeldung des neuen, zu konfigurierenden Busteilnehmers nicht von bereits angemeldeten und konfigurierten Busteilnehmern gestört oder verzögert wird. Es ist hierdurch auch möglich, das erfindungsgemäße Verfahren mit wesentlich weniger Verfahrensschritten durchzuführen. Der erstmalige Empfang kann sich je nach der konkreten Realisierung des erfindungsgemäßen Verfahrens auf den erstmaligen Empfang nach jedem Einschalten des Steuerungssystems beziehen. Bevorzugt bezieht er sich jedoch auf den erstmaligen Empfang nach dem Anschluß des Busteilnehmers an den Feldbus.

In einer weiteren Ausgestaltung der zuvor genannten Maßnahmen wird das definierte Wartungstelegramm nur nach Aktivieren eines besonderen Wartungsmodus der Verwaltungseinheit versendet.

Die Aktivierung des besonderen Wartungsmodus erfolgt bevorzugt durch die Betätigung eines Schlüsselschalters oder eines Codeschlosses, das mit der Verwaltungseinheit verbunden ist. Der besondere Wartungsmodus der Verwaltungseinheit unterscheidet sich von allen anderen Betriebsmodi der Verwaltungseinheit darin, daß nur in diesem Wartungsmodus das definierte Wartungstelegramm versendet wird. Die Maßnahme besitzt den Vorteil, daß die Zuordnung von Teilnehmeradressen nur nach einem bewußten Eingriff in das sichere Steuerungssystem möglich ist. Hierdurch wird eine versehentliche Vergabe von Teilnehmeradressen verhindert. Infolge dessen ist das Risiko einer falschen Zuordnung von Teilnehmeradressen beträchtlich reduziert.

In einer weiteren Ausgestaltung der zuvor genannten Maßnahme beendet die Verwaltungseinheit den besonderen Wartungsmodus automatisch nach Empfang des zweiten Anmeldetelegramms.

Auch diese Maßnahme trägt erheblich dazu bei, das Risiko einer fehlerhaften Adreßzuordnung zu minimieren, da der besondere Wartungsmodus in diesem Fall nur für jeweils eine einzige Adreßzuordnung aktiviert werden kann. Es ist hiernach also für jede Zuordnung einer Teilnehmeradresse der erneute, bewußte Eingriff in das sichere Steuerungssystem notwendig. Die Sicherheit des Systems wird hierdurch nochmals beträchtlich verbessert.

In einer weiteren Ausgestaltung der zuvor genannten Maßnahmen wird der Verwaltungseinheit zu Beginn des besonderen Wartungsmodus die definierte Teilnehmeradresse übermittelt.

Alternativ zu dieser Maßnahme ist es möglich, daß die Verwaltungseinheit die definierte Teilnehmeradresse selbständig aus einem Speicher ausliest und somit den einzelnen Busteilnehmern der Reihe nach Teilnehmeradressen aus einer Liste von Teilnehmeradressen zuordnet. Die zuvor genannte Maßnahme besitzt demgegenüber den Vorteil, daß für die Zuordnung jeder individuellen Teilnehmeradresse erneut eine bewußte Handlung desjenigen erforderlich ist, der die Konfiguration der Busteilnehmer durchführen möchte. Auch hierdurch wird die Sicherheit der Adreßzuordnung beträchtlich erhöht.

In einer weiteren Ausgestaltung der zuvor genannten Maßnahme erzeugt die Verwaltungseinheit ein Fehlersignal, wenn die übermittelte Teilnehmeradresse bereits an einen an den Feldbus angeschlossenen Busteilnehmer vergeben ist.

Auch diese Maßnahme trägt zur Vermeidung einer fehlerhaften Adreßzuordnung bei, da hierdurch die mehrfache Zuordnung einer Teilnehmeradresse an verschiedene Busteilnehmer zuverlässig verhindert ist.

In einer weiteren Ausgestaltung der Erfindung versendet die Verwaltungseinheit Wartungstelegramme in definierten Zeitabständen an alle an den Feldbus angeschlossenen Busteilnehmer.

Diese Maßnahme steht im Gegensatz dazu, daß ein Wartungstelegramm jeweils nur nach einer individuellen Aktivierung eines besonderen Wartungsmodus versendet werden kann. Die genannte Maßnahme besitzt demgegenüber den Vorteil, daß der Anschluß eines neuen Busteilnehmers im laufenden Betrieb des Steuerungssystems auf sehr einfache und komfortable Weise möglich ist. Die Teilnehmeradresse kann hierbei entweder von der Verwaltungseinheit automatisch aus einer Liste von möglichen Teilnehmeradressen ausgewählt werden oder sie kann der Verwaltungseinheit vor dem Anschließen des neuen Busteilnehmers übermittelt werden.

Eine weitere Ausgestaltung des erfindungsgemäßen Verfahrens ist durch die folgenden Schritte gekennzeichnet:
- Überprüfen der Anwesenheit aller aktiv an den Feldbus angeschlossenen Busteilnehmer anhand einer Sollkonfiguration von Busteilnehmern sowie anhand von Antworttelegrammen der Busteilnehmer und
- Versenden der Teilnehmeradresse eines als nicht mehr aktiv erkannten Busteilnehmers als definierte Teilnehmeradresse.

Diese Ausgestaltung der Erfindung ist besonders vorteilhaft im Hinblick auf Wartungsarbeiten an einem bereits eingerichteten, sicheren Steuerungssystem. Mit der bekannten Maßnahme ist es nämlich auf einfache Weise möglich, einen defekten Busteilnehmer durch einen neuen Busteilnehmer auszutauschen, ohne daß dem neuen Busteilnehmer hierbei bewußt eine Teilnehmeradresse zugeordnet werden muß. Die Verwaltungseinheit prüft in dieser Ausgestaltung des Verfahrens nämlich laufend, ob alle bei ihr angemeldeten Busteilnehmer aktiv am Feldbus angeschlossen sind. Fehlt ein einzelner Busteilnehmer, so deutet dies auf einen Defekt oder darauf hin, daß dieser Busteilnehmer bereits vom Feldbus abgetrennt wurde. Aufgrund der bekannten Sollkonfiguration kann die Verwaltungseinheit die Teilnehmeradresse dieses fehlenden Busteilnehmers identifizieren. Sobald sich bei der Verwaltungseinheit dann ein neuer Busteilnehmer unter der festgelegten Universaladresse anmeldet, wird diesem die Teilnehmeradresse des fehlenden Busteilnehmers zugeordnet. Auf diese Weise ist der Austausch eines defekten Busteilnehmers möglich, ohne daß dem neuen Busteilnehmer die alte Teilnehmeradresse von Hand zugeordnet werden muß. Besonders bevorzugt wird diese Ausgestaltung der Erfindung damit kombiniert, daß das definierte Wartungstelegramm nur nach Aktivieren eines besonderen Wartungsmodus der Verwaltungseinheit versendet wird. In dieser Kombination ist nämlich einerseits eine sehr große Sicherheit bezüglich der Zuordnung einer Teilnehmeradresse gegeben, während andererseits ein defekter Busteilnehmer sehr einfach und ohne Fachkenntnisse ausgetauscht werden kann. Dies ist besonders vorteilhaft im Hinblick auf Produktionsanlagen, die rund um die Uhr betrieben werden.

In einer weiteren Ausgestaltung der Erfindung erzeugt die Verwaltungseinheit ein Fehlersignal, wenn mehr als ein Busteilnehmer das erste Anmeldetelegramm versendet.

Auch diese Maßnahme besitzt den Vorteil, daß die Sicherheit erhöht wird, da in diesem Fall die gleichzeitige Zuordnung einer Teilnehmeradresse an mehrere Busteilnehmer verhindert ist.

In einer weiteren Ausgestaltung der Erfindung werden zumindest das erste Anmeldetelegramm sowie das Adreßvergabetelegramm mit jeweils einem Quittungstelegramm beantwortet.

Diese Maßnahme zielt darauf ab, daß der Empfänger der genannten Telegramme unabhängig von deren eigentlicher Verarbeitung ein Quittungstelegramm an den Absender zurückschickt. Hierdurch wird ebenfalls die Sicherheit der Adreßzuordnung beträchtlich erhöht, da der Absender auf diese Weise überprüfen kann, ob der Empfänger das jeweilige Telegramm fehlerfrei erhalten hat.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Steuerungssystems zum sicheren Steuern von sicherheitskritischen Prozessen,
- Fig. 2: den Kommunikationsablauf zwischen einer Verwaltungseinheit und zwei Busteilnehmern bei einem ersten Ausführungsbeispiel der Erfindung und
- Fig. 3: den Kommunikationsablauf zwischen der Verwaltungseinheit und den beiden Busteilnehmern bei weiteren Ausführungsbeispielen der Erfindung.

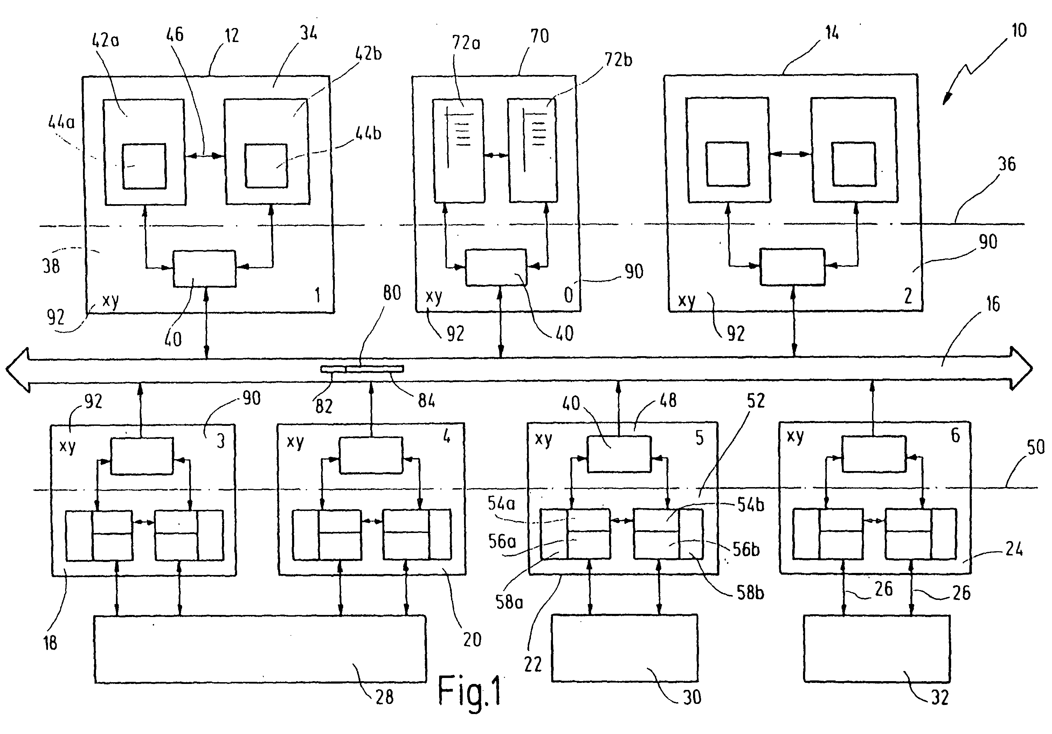

In Fig. 1 ist ein Steuerungssystem zum sicheren Steuern von sicherheitskritischen Prozessen in seiner Gesamtheit mit der Bezugsziffer 10 bezeichnet.

Das Steuerungssystem 10 besitzt zwei sichere Steuerungseinheiten 12 und 14, die über einen Feldbus 16 mit insgesamt vier sicheren Signaleinheiten 18, 20, 22 und 24 verbunden sind. Die Steuerungseinheiten 12, 14 und die Signaleinheiten 18 bis 24 sind Busteilnehmer im Sinne der vorliegenden Erfindung.

Jede der sicheren Signaleinheiten 18 bis 24 weist mehrere E/A-Kanäle auf, über die sie mit jeweils einem sicherheitskritischen Prozeß 28, 30, 32 verbunden ist. Im vorliegenden Fall sind die sicheren Signaleinheiten 18 und 20 mit dem Prozeß 28 verbunden, während die Signaleinheit 22 mit dem Prozeß 30 und die Signaleinheit 24 mit dem Prozeß 32 verbunden ist. Bei dem sicherheitskritischen Prozeß 28 handelt es sich bspw. um die Zwei-Hand-Steuerung einer Maschinenanlage, bei der außerdem auch die Drehzahl einer hier nicht dargestellten Maschinenwelle überwacht wird. Der sicherheitskritische Prozeß 30 ist bspw. die Überwachung eines Not-Aus-Schalters und der sicherheitskritische Prozeß 32 die Überwachung eines Schutzgitters (hier ebenfalls nicht dargestellt).

Die Signaleinheiten 18 bis 24 lesen über ihre E/A-Kanäle 26 Signale und/oder Datenwerte der sicherheitskritischen Prozesse 28 bis 32 ein. Derartige Signale bzw. Datenwerte sind bspw. die aktuelle Drehzahl der Maschinenwelle und die Schalterstellung des Not-Aus-Schalters. Andererseits können die Signaleinheiten 18 bis 24 über die E/A-Kanäle 26 auf hier nicht dargestellte Aktoren einwirken, mit denen die sicherheitskritischen Prozesse 28 bis 32 beeinflußt werden. So gehört bspw. zu dem sicherheitskritischen Prozeß 30, bei dem die Schalterstellung des Not-Aus-Schalters überwacht wird, ein Aktor, mit dem die Stromversorgung der gesteuerten und überwachten Maschinenanlage abgeschaltet werden kann.

Die sicheren Steuerungseinheiten 12 und 14 sind SPS-Steuerungen. Sie sind hier vom Grundsatz her gleich zueinander aufgebaut und unterscheiden sich im wesentlichen durch verschiedenen Anwendungsprogramme, die auf ihnen ausgeführt werden.

Bei der nachfolgenden Erläuterung der Steuerungseinheiten 12, 14 bzw. der Signaleinheiten 18 bis 24 sind die jeweils genannten Bezugszeichen in Fig. 1 aus Gründen der Übersichtlichkeit nur einfach aufgeführt.

Die Steuerungseinheiten 12, 14 beinhalten jeweils einen sicheren Verarbeitungsteil 34, der in Fig. 1 oberhalb der strichpunktierten Linie 36 dargestellt ist. Unterhalb der Linie 36 befindet sich ein nicht-sicherer Teil 38, der im wesentlichen einen als Buscontroller bezeichneten Baustein 40 enthält. Der Buscontroller 40 ist ein Standard-Baustein, in dem das Standard-Protokoll des verwendeten Feldbusses 16 implementiert ist. Der Buscontroller 40 ist in der Lage, das Versenden und Empfangen von Nachrichten in Form von Telegrammen eigenständig abzuwickeln. Die zu versendenden Nachrichten erhält der Buscontroller 40 von dem sicheren Verarbeitungsteil 34. Umgekehrt stellt der Buscontroller 40 empfangene Nachrichten dem sicheren Verarbeitungsteil 34 zur Verfügung.

Entsprechend einer bevorzugten Ausführung der Erfindung handelt es sich bei dem Feldbus 16 hier um einen CAN-Bus. Bei diesem Bus werden die zu versendenden Nachrichten innerhalb eines Nutzdatenfeldes übertragen, das für seinen Weg über den Feldbus 16 mit zusätzlichen Steuerungsinformationen ergänzt wird. Das gesamte Paket aus Steuerungsinformationen und Nutzdatenfeld bildet das Bustelegramm. Der Buscontroller 40 ist in der Lage, Nachrichten, die er von dem sicheren Verarbeitungsteil 34 erhält, selbständig in der dem Protokoll entsprechenden Form in die zu versendenden Bustelegramme einzubetten. Umgekehrt kann er bei einem empfangenen Bustelegramme die im Nutzdatenfeld enthaltenen Nachrichten extrahieren.

Der sichere Verarbeitungsteil 34 jeder Steuerungseinheit 12, 14 ist zweikanalig-redundant aufgebaut. Jeder der beiden Kanäle enthält im wesentlichen einen Prozessor 42a, 42b mit jeweils zugehöriger Peripherie, mit dem ein Anwendungsprogramm 44a, 44b ausgeführt wird. In dem Anwendungsprogramm 44a, 44b ist die Steuerung der Maschinenanlage und damit die Intelligenz der Steuerungseinheiten 12, 14 niedergelegt.

Die beiden Prozessoren 42a, 42b führen sicherheitsrelevante Aufgaben redundant zueinander aus. Dabei kontrollieren sie sich gegenseitig, was in Fig. 1 durch einen Pfeil 46 dargestellt ist. Die sicherheitsrelevanten Aufgaben beinhalten bspw. Maßnahmen zur Fehlersicherung von übertragenen bzw. versendeten Nachrichten. Diese Maßnahmen erfolgen zusätzlich und in Ergänzung zu Fehlersicherungsmaßnahmen, die bereits standardmäßig von dem Buscontroller 40 durchgeführt werden. Hierdurch ist es möglich, die Fehlerwahrscheinlichkeit gegenüber dem an sich nicht-sicheren Feldbus 16 beträchtlich zu erhöhen.

Die Signaleinheiten 18 bis 24 sind über den gleichen Buscontroller 40 an den Feldbus 16 angeschlossen wie die sicheren Steuerungseinheiten 12, 14. Dementsprechend ist der Teil 48 oberhalb der Linie 50 in Fig. 1 wiederum nicht-sicher im Sinne der vorliegenden Erfindung. In dem sicheren Verarbeitungsteil unterhalb der Linie 50 ist jede Signaleinheit 18 bis 24 wiederum zweikanalig-redundant aufgebaut. Die beiden redundanten Verarbeitungskanäle sind wiederum in der Lage, eine gegenseitige Fehlerüberwachung durchzuführen.

Jeder der Verarbeitungskanäle der Signaleinheiten 18 bis 24 besitzt einen Prozessor 54a, 54b sowie ein Schaltmittel 56a, 56b.

Mit den Bezugsziffern 58a, 58b ist jeweils ein Speicher bezeichnet, in dem einerseits eine festgelegte Universaladresse abgelegt ist und in dem die Prozessoren 54a, 54b andererseits eine zugeordnete Teilnehmeradresse abspeichern können. In Verbindung mit dem Buscontroller 40 ist jede Signaleinheit 18 bis 24 daher in der Lage, sich unter der festgelegten Universaladresse bei einer an dem Feldbus angeschlossenen Verwaltungseinheit anzumelden bzw. umgekehrt ein Adreßvergabetelegramm mit einer zugeordneten Teilnehmeradresse aufzunehmen und auszuwerten. Dieselbe Fähigkeit besitzen auch die sicheren Steuerungseinheiten 12, 14, wenngleich dies in Fig. 1 nicht explizit dargestellt ist.

Die Schaltmittel 56a, 56b versetzen die Signaleinheiten 18 bis 24 in die Lage, die hier nicht dargestellten Aktoren zur Beeinflussung der sicherheitskritischen Prozesse 28 bis 32 zu aktivieren. Damit sind die sicheren Signaleinheiten 18 bis 24 in der Lage, die sicherheitskritischen Prozesse 28 bis 32 in einen sicheren Zustand zu überführen, wie bspw. bei einer Betätigung des Not-Aus-Schalters die Maschinenanlage abzuschalten.

Mit der Bezugsziffer 70 ist in Fig. 1 die bereits erwähnte Verwaltungseinheit bezeichnet, die in der Fachterminologie auch als "Management Device" bezeichnet wird. Die Verwaltungseinheit 70 ist ebenfalls über einen Buscontroller 40 an den Feldbus 16 angeschlossen. Sie kann daher mit den übrigen an den Feldbus 16 angeschlossenen Einheiten kommunizieren. An der Steuerung der sicherheitskritischen Prozesse 28 bis 32 ist sie jedoch nicht unmittelbar beteiligt.

In ihrem sicheren Verarbeitungsteil besitzt die Verwaltungseinheit 70 im wesentlichen zwei zueinander redundante Speicher 72a, 72b, in denen unter anderem die gesamte Konfiguration des Steuerungssystems 10, insbesondere die Zuordnung der definierten Teilnehmeradressen an die Busteilnehmer 12, 14 bzw. 18 bis 24 abgelegt ist. Die Verwaltungseinheit 70 besitzt eine zentrale Verwaltungs- und Überwachungsfunktion, die unabhängig von der Steuerung der Prozesse 28 bis 32 abläuft. Beispielsweise initiiert die Verwaltungseinheit 70 in regelmäßigen Zeitintervallen eine Verbindungsprüfung zwischen den Steuerungseinheiten 12, 14 und den Signaleinheiten 18 bis 24. Dabei überprüft die Verwaltungseinheit 70 durch Versenden eines verbindungsprüftelegramms an die Steuerungseinheiten 12, 14, ob die Verbindung zu diesen Steuerungseinheiten fehlerfrei funktioniert. Als Reaktion auf dieses Prüftelegramm versenden die Steuerungseinheiten 12, 14 ihrerseits Prüftelegramme an die ihnen zugeordneten Signaleinheiten 18 bis 24. Die Verwaltungseinheit 70 überwacht dabei den gesamten Datenverkehr und erhält hierdurch in regelmäßigen Zeitintervallen eine Information darüber, ob immer noch alle ihr bekannten Busteilnehmer aktiv am Feldbus 16 angeschlossen sind. Bei Ausbleiben eines erwarteten Prüftelegramms oder auch beim Ausbleiben eines erwarteten Antworttelegramms erzeugt die Verwaltungseinheit ein Fehlertelegramm, aufgrund dessen die sicherheitskritischen Prozesse 28 bis 32 in ihren sicheren Zustand überführt werden.

Alternativ zu dem hier dargestellten Ausführungsbeispiel kann die Verwaltungseinheit 70 auch in einer der Steuerungseinheiten 12, 14 integriert sein. In diesem Fall stellt die Verwaltungseinheit 70 einen Funktionsblock innerhalb der Steuerungseinheit 12, 14 dar. In einem weiteren, hier ebenfalls nicht dargestellten Ausführungsbeispiel besitzt das Steuerungssystem 10 nur eine Steuerungseinheit 12.

Mit der Bezugsziffer 80 ist beispielhaft ein Bustelegramm bezeichnet, das zwischen zwei Busteilnehmern über den Feldbus 16 übertragen wird. Das Bustelegramm 80 weist dem verwendeten, standardisierten Protokoll entsprechend ein Adreßfeld 82 sowie ein Nutzdatenfeld 84 auf. Zudem können weitere, hier nicht dargestellte Steuerungsinformationen in dem Bustelegramm 80 enthalten sein.

In der Darstellung in Fig. 1 ist jeder der an den Feldbus 16 angeschlossenen Einheiten eine individuelle, definierte Teilnehmeradresse 90 zugeordnet, die bei der Steuerungseinheit 14 beispielhaft mit "2" angenommen ist. Die Verwaltungseinheit 70 besitzt hiernach die definierte Teilnehmeradresse "0" und die Signaleinheit 18 beispielhaft die Teilnehmeradresse "3". Darüber hinaus ist in jeder Einheit eine festgelegte Universaladresse 92 abgelegt, die in Fig. 1 symbolisch als "xy" dargestellt ist. Es versteht sich, daß sowohl die Teilnehmeradresse 90 als die Universaladresse 92 jeweils als Datenwert in einem Speicher der einzelnen Einheiten abgelegt ist.

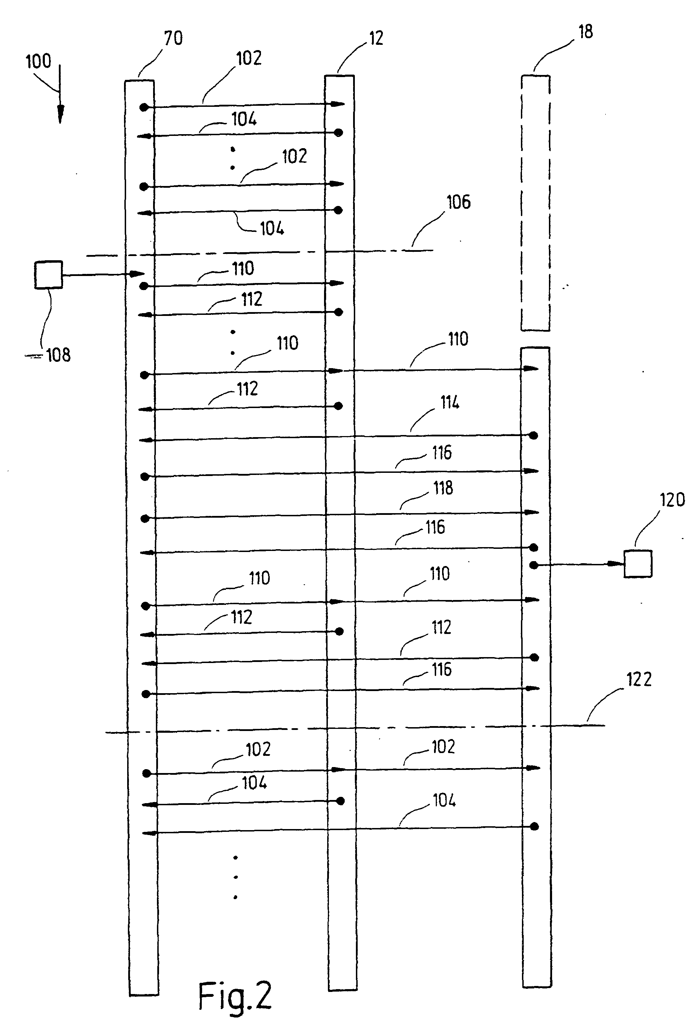

In Fig. 2 ist am Beispiel der Verwaltungseinheit 70, der sicheren Steuerungseinheit 12 sowie der sicheren Signaleinheit 18 der zeitliche Ablauf der Kommunikation beim Konfigurieren der Signaleinheit 18 dargestellt. Dabei verläuft eine Zeitachse in Richtung des Pfeils 100. Die einzelnen Telegramme, die zwischen den verschiedenen Einheiten versendet werden, sind anhand von Pfeilen symbolisiert, deren Ausgangspunkt beim Absender mit einem Punkt versehen ist und deren Endpunkt jeweils auf den Empfänger verweist.

In dem ersten Zeitabschnitt in Fig. 2 ist die sichere Signaleinheit 18 noch nicht am Feldbus 16 angeschlossen. Sie ist daher in diesem Zeitabschnitt nur gestrichelt dargestellt. Die Verwaltungseinheit 70 versendet in regelmäßigen Zeitabständen ein Verbindungsprüfungstelegramm 102 an die Steuerungseinheit 12. Diese antwortet daraufhin mit einem Antworttelegramm 104. Der Eingang des Antworttelegramms 104 innerhalb einer vorgegebenen Zeitspanne wird von der Verwaltungseinheit 70 überwacht. Infolge dessen ist die Verwaltungseinheit 70 in der Lage, die tatsächliche Anzahl der aktiv an den Feldbus 16 angeschlossenen Einheiten mit der Sollanzahl gemäß einer Sollkonfiguration zu vergleichen. Nach Ablauf der festgelegten Zeitspanne wiederholt sich der Vorgang, d.h. die Verwaltungseinheit 70 versendet erneut das Verbindungsprüfungstelegramm 102 und empfängt das Antworttelegramm 104.

Nun sei angenommen, daß die Signaleinheit 18 neu an den Feldbus 16 angeschlossen werden soll. Dementsprechend muß die Signaleinheit 18 konfiguriert werden, wobei ihr eine definierte Teilnehmeradresse 90 zugeordnet wird. Gemäß dem hier dargestellten Ausführungsbeispiel der Erfindung wird die Verwaltungseinheit 70 zunächst in einen besonderen Wartungsmodus versetzt. Dies geschieht bei dem bevorzugten Ausführungsbeispiel mit Hilfe eines Schlüsselschalters, der an der Verwaltungseinheit 70 angeordnet ist. Die Aktivierung des besonderen Wartungsmodus ist in Fig. 2 anhand der Linie 106 symbolisiert.

Nach der Aktivierung des besonderen Wartungsmodus wird der Verwaltungseinheit 70 mit Hilfe eines Eingabegerätes 108 die definierte Teilnehmeradresse 90 übermittelt, die der Signaleinheit 18 zugeordnet werden soll. Anschließend versendet die Verwaltungseinheit 70 ein definiertes Wartungstelegramm 110, das sich von dem Verbindungsprüfungstelegramm 102 im normalen Betriebsmodus der Verwaltungseinheit 70 unterscheidet. Die bereits an den Feldbus 16 angeschlossene Steuerungseinheit 12 antwortet auf den Empfang des Wartungstelegramms 110 mit einem Anmeldetelegramm 112, das die definierte Teilnehmeradresse der Steuerungseinheit 12, hier also beispielhaft die Teilnehmeradresse "1", beinhaltet. Das Anmeldetelegramm 112 ist somit das zweite Anmeldetelegramm im Sinne der vorliegenden Erfindung. Gemäß einer bevorzugten Ausführung der Erfindung ist das Anmeldetelegramm 112 der Steuerungseinheit 12 mit dem zuvor erwähnten Antworttelegramm 104 identisch. Dies ist jedoch zur Durchführung des Verfahrens nicht unbedingt notwendig.

Der Versand des Wartungstelegramms 110 bzw. der Empfang des zweiten Anmeldetelegramms 112 wiederholt sich zyklisch. Während dieser Zeit ist es möglich, die sichere Signaleinheit 18 an den Feldbus 16 anzuschließen. Nachdem dies geschehen ist, empfängt die Signaleinheit 18 ebenso wie die Steuerungseinheit 12 das Wartungstelegramm 110. Während die Steuerungseinheit 12 auf dieses Wartungstelegramm 110, wie zuvor beschrieben, mit dem zweiten Anmeldetelegramm 112 antwortet, versendet die Signaleinheit 18 als Antwort auf den erstmaligen Empfang des Wartungstelegramms 110 ein erstes Anmeldetelegramm 114, das die festgelegte Universaladresse "xy" beinhaltet. Die Verwaltungseinheit 70 empfängt das erste Anmeldetelegramm 114 und versendet ein Quittungstelegramm 116 an die Signaleinheit 18. Anschließend versendet die Verwaltungseinheit 70 ein Adreßvergabetelegramm 118, in dessen Nutzdatenfeld die definierte Teilnehmeradresse "3" enthalten ist. Die Signaleinheit 18 quittiert den Empfang des Adreßvergabetelegramms 118 mit einem Quittungstelegramm 116. Anschließend legt die Signaleinheit 18 die definierte Teilnehmeradresse "3" in einem Speicher 120 ab.

Nachdem die Verwaltungseinheit 70 das Quittungstelegramm 116 von der Signaleinheit 18 empfangen hat, versendet sie erneut das Wartungstelegramm 110. Daraufhin meldet sich die Steuerungseinheit 12, wie üblich, mit dem zweiten Anmeldetelegramm 112 bei der Verwaltungseinheit 70 an. Darüber hinaus meldet sich nun jedoch auch die Signaleinheit 18 mit ihrem zweiten Anmeldetelegramm 112 bei der Verwaltungseinheit 70 an. In diesem Fall enthält das zweite Anmeldetelegramm 112 die Teilnehmeradresse "3", die der Signaleinheit 18 zugeordnet wurde. Die Verwaltungseinheit 70 quittiert den Empfang des zweiten Anmeldetelegramms 112 mit einem Quittungstelegramm 116.

Nach dem Ablauf des beschriebenen Telegrammverkehrs ist die Signaleinheit 18 im Sinne der vorliegenden Erfindung konfiguriert. Gemäß dem bevorzugten Ausführungsbeispiel der Erfindung beendet die Verwaltungseinheit 70 daher automatisch den besonderen Wartungsmodus, was anhand der Linie 122 angedeutet ist. Sodann findet wiederum der bereits beschriebene, normale Datenverkehr zwischen der Verwaltungseinheit 70 und den an den Feldbus 16 angeschlossenen Einheiten 12, 18 statt. Hierbei versendet die Verwaltungseinheit 70 in zyklischen Zeitabständen das Verbindungsprüfungstelegramm 102 und empfängt die Antworttelegramme 104.

Abweichend von dem hier dargestellten Ablauf beendet die Verwaltungseinheit 70 in einem anderen Ausführungsbeispiel der Erfindung den besonderen Wartungsmodus bereits nach dem Abspeichern der zugeordneten Adresse in der Signaleinheit 18. In diesem Fall meldet sich die Signaleinheit 18 mit dem zweiten Anmeldetelegramm 112 erst wieder im normalen Betriebsmodus der Verwaltungseinheit 70 bei dieser an.

Aus Gründen der Übersichtlichkeit wurde der Versand des Quittungstelegramms 116 hier nur in Bezug auf die zu konfigurierende Signaleinheit 18 erwähnt. Abweichend hiervon wird bei dem bevorzugten Ausführungsbeispiel des Steuerungssystems 10 jedoch jedes versendete Telegramm mit einem Quittungstelegramm 116 beantwortet. Das Ausbleiben des Quittungstelegramms 116 führt automatisch zur Erzeugung einer Fehlermeldung.

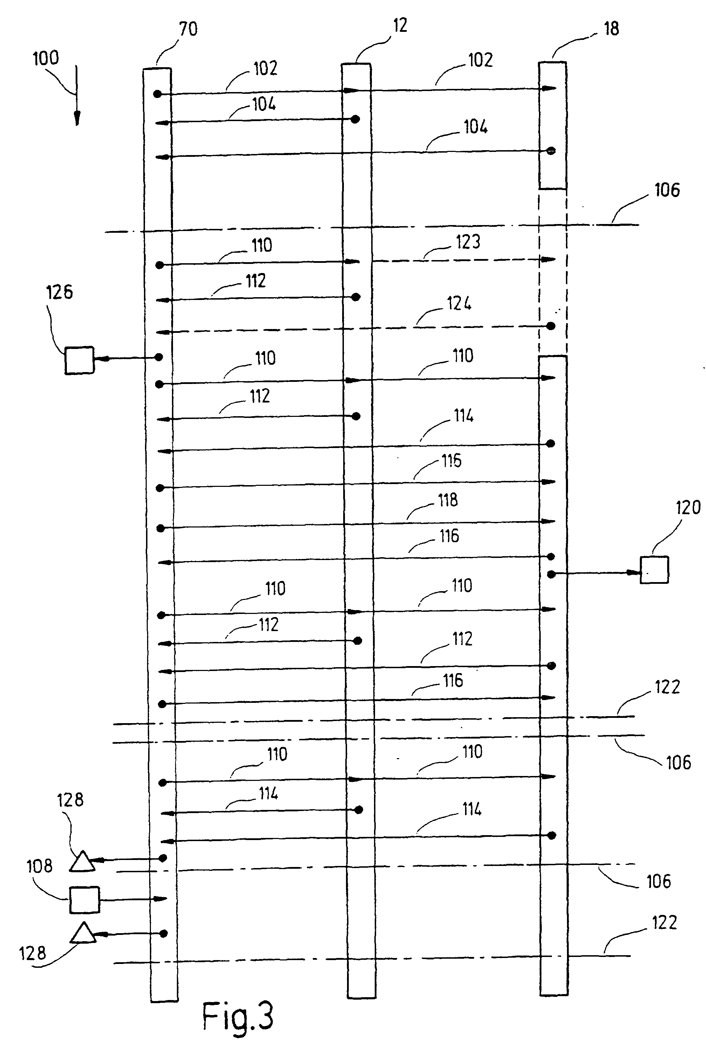

Fig. 3 zeigt den Ablauf des erfindungsgemäßen Verfahrens bei einem Austausch der Signaleinheit 18. Auch hierbei befindet sich die Verwaltungseinheit 70 zunächst in ihrem normalen Betriebsmodus, in dem sie in zyklischen Zeitabständen Verbindungsprüfungstelegramme 102 an sämtliche an den Feldbus 16 angeschlossenen Einheiten versendet. Die angeschlossenen Einheiten, in diesem Fall die Steuerungseinheit 12 und die Signaleinheit 18, antworten mit entsprechenden Antworttelegrammen 104. Aufgrund dieser Antworttelegramme ist die Verwaltungseinheit 70 über die Anzahl der aktiv an den Feldbus 16 angeschlossenen Einheiten 12, 18 informiert.

Zum Austausch der Signaleinheit 18 wird zunächst die Verwaltungseinheit 70 in den besonderen Wartungsmodus versetzt. Dies ist anhand der Linie 106 dargestellt. Zuvor wurde die auszutauschende Signaleinheit 18 vom Feldbus 16 abgetrennt.

In dem besonderen Wartungsmodus versendet die Verwaltungseinheit 70, wie erläutert, ein definiertes Wartungstelegramm 110, das jedoch die Signaleinheit 18 nicht mehr erreicht. Dies ist in Fig. 3 anhand des gestrichelten Pfeils 123 dargestellt. Die Steuerungseinheit 12 antwortet wie üblich mit dem zweiten Anmeldetelegramm 112 auf den Empfang des Wartungstelegramms 110. Das zweite Anmeldetelegramm der Signaleinheit 18 bleibt hingegen aus, was durch den gestrichelten Pfeil 124 dargestellt ist. Die Verwaltungseinheit 70 kann daher erkennen, daß die Signaleinheit 18 nicht mehr aktiv an den Feldbus 16 angeschlossen ist. Sie speichert daher die definierte Teilnehmeradresse "3", die der Signaleinheit 18 zugeordnet war, in einem Speicher 126. Anschließend versendet sie das Wartungstelegramm 110 erneut in zyklischen Zeitabständen. Die Steuerungseinheit 12 antwortet hierauf, wie erläutert, mit dem zweiten Anmeldetelegramm 112.

Nun kann die Signaleinheit 18 oder ein entsprechendes Austauschgerät an den Feldbus 16 angeschlossen werden.

Sobald die neu angeschlossene Signaleinheit 18 das Wartungstelegramm 110 empfängt, versendet sie das erste Anmeldetelegramm 114, in dem die festgelegte Universaladresse "xy" enthalten ist. Die neue Signaleinheit 18 meldet sich hierdurch bei der Verwaltungseinheit 70 unter der festgelegten Universaladresse "xy" an. Die Verwaltungseinheit 70 quittiert den Empfang des ersten Anmeldetelegramms 114, wie bereits erläutert, mit einem Quittungstelegramm 116 und versendet anschließend das Adreßvergabetelegramm 118. Dieses enthält nun die definierte Teilnehmeradresse "3", die die Verwaltungseinheit 70 zuvor in den Speicher 126 abgelegt hat. Die Signaleinheit 18 quittiert den Empfang des Adreßvergabetelegramms 118 mit einem Quittungstelegramm 116 und speichert die zugeordnete Teilnehmeradresse "3" in ihrem Speicher 120 ab. Anschließend versendet die Verwaltungseinheit 70 erneut das Wartungstelegramm 110 und empfängt sowohl von der Steuerungseinheit 12 als auch von der Signaleinheit 18 das zweite Anmeldetelegramm 112. Sie quittiert den Empfang dieser Anmeldungstelegramme mit dem Quittungstelegramm 116 und beendet den besonderen Wartungsmodus, was wiederum anhand der Linie 122 dargestellt ist.

Mit diesem beschriebenen Verfahren ist es somit möglich, einen an den Feldbus 16 angeschlossenen Busteilnehmer auszutauschen, ohne daß man dessen definierte Teilnehmeradresse kennen muß.

In dem nächsten Zeitabschnitt in Fig. 3 ist der Verfahrensablauf dargestellt, der sich ergibt, wenn sich mehrere Busteilnehmer unter der festgelegten Universaladresse "xy" bei der Verwaltungseinheit 70 anmelden. Wie zuvor beschrieben, wurde die Verwaltungseinheit 70 zunächst in den besonderen Wartungsmodus versetzt. Sie versendet daraufhin das Wartungstelegramm 110. Wenn nun sowohl die Steuerungseinheit 12 als auch die Signaleinheit 18 mit dem ersten Anmeldetelegramm 114 antworten, aktiviert die Verwaltungseinheit 70 eine Fehleranzeige 128 und bricht den besonderen Wartungsmodus ab.

In dem nächsten Zeitabschnitt ist eine weitere Fehlerquelle dargestellt. Hierbei ist angenommen, daß der Verwaltungseinheit 70 nach dem Aktivieren des besonderen Wartungsmodus über das Eingabegerät 108 eine Teilnehmeradresse übermittelt wird, die bereits einem an den Feldbus 16 angeschlossenen Busteilnehmer zugeordnet ist. Die Verwaltungseinheit 70 erkennt aufgrund der ihr bekannten Sollkonfiguration der aktiven Busteilnehmer die doppelte Adreßvergabe und aktiviert die Fehleranzeige 128. Außerdem beendet sie wiederum den besonderen Wartungsmodus.

Gemäß einer weiteren bevorzugten Ausführungsform der Erfindung korreliert die definierte Teilnehmeradresse 90 hier zusätzlich mit einer der jeweiligen Signaleinheit 18 - 24 zugeordneten funktionalen Prozeßadresse in einem Prozeßabbild der SPS-Steuerungseinheiten 12 bzw. 14, wobei die Anwendungsprogramme 44a, 44b in einer bei SPS-Steuerungen an sich bekannten Weise auf diese Prozeßabbilder zugreifen. Die funktionale Prozeßadresse identifiziert eindeutig die Funktion eines an die Signaleinheiten 18 - 24 angeschlossenen Sensors bzw. Aktuators, bspw. einer Lichtschranke. Die definierte Teilnehmeradresse 90 erhält hierdurch eine Doppelfunktion, da sie einerseits die Signaleinheiten 18 - 24 für die Kommunikation auf dem Feldbus 16 identifizierbar macht und andererseits den Anwendungsprogrammen 44a, 44b eine stets gleichbleibende Zugriffsmöglichkeit auf die Prozeßdaten bereitstellt.

## Patentansprüche

1. Verfahren zum Konfigurieren eines sicheren Busteilnehmers (12, 14, 18 - 24) beim Anschließen an einen Feldbus (16) in einem sicheren Steuerungssystem (10), wobei dem sicheren Busteilnehmer (12, 14, 18 - 24) eine definierte Teilnehmeradresse (90) zugeordnet wird, mit den Schritten:
- Versenden eines ersten Anmeldetelegramms (114) von dem sicheren Busteilnehmer (12, 14, 18 - 24) zu einer an den Feldbus (16) angeschlossenen Verwaltungseinheit (70), wobei das erste Anmeldetelegramm (114) eine festgelegte Universaladresse (92) beinhaltet,
- Versenden eines Adreßvergabetelegramms (118) von der Verwaltungseinheit (70) an den sicheren Busteilnehmer (12, 14, 18 - 24), wobei das Adreßvergabetelegramm (118) die definierte Teilnehmeradresse (90) beinhaltet und
- Abspeichern der definierten Teilnehmeradresse (90) in einem Speicher (58; 120) des sicheren Busteilnehmers,
- wobei der sichere Busteilnehmer (12, 14, 18 - 24) das erste Anmeldetelegramm (114) nach dem Empfang eines definierten Wartungstelegramms (110) an die Verwaltungseinheit (70) versendet.

2. Verfahren nach Anspruch 1, **dadurch gekennzeichnet, daß** der sichere Busteilnehmer (12, 14, 18 - 24) nach Empfang des Adreßvergabetelegramms (118) ein zweites Anmeldetelegramm (112) an die Verwaltungseinheit (70) versendet, wobei das zweite Anmeldetelegramm (112) die definierte Teilnehmeradresse (90) beinhaltet.

3. Verfahren nach Anspruch 1 oder 2, **dadurch gekennzeichnet, daß** der sichere Busteilnehmer (12, 14, 18 - 24) das erste Anmeldetelegramm (114) nur nach dem erstmaligen Empfang des definierten Wartungstelegramms (110) an die Verwaltungseinheit (70) versendet, während er bei einem wiederholten Empfang des definierten Wartungstelegramms (110) das zweite Anmeldetelegramm (112) an die Verwaltungseinheit (70) versendet.

4. Verfahren nach einem der Ansprüche 1 bis 3, **dadurch gekennzeichnet, daß** das definierte Wartungstelegramm (110) nur nach Aktivieren (106) eines besonderen Wartungsmodus (106) der Verwaltungseinheit (70) versendet wird.

5. Verfahren nach Anspruch 4, **dadurch gekennzeichnet, daß** die Verwaltungseinheit (70) den besonderen Wartungsmodus nach Empfang des zweiten Anmeldetelegramms (112) automatisch beendet (122).

6. Verfahren nach Anspruch 4 oder 5, **dadurch gekennzeichnet, daß** der Verwaltungseinheit (70) zu Beginn des besonderen Wartungsmodus die definierte Teilnehmeradresse (90) übermittelt wird (108).

7. Verfahren nach Anspruch 6, **dadurch gekennzeichnet, daß** die Verwaltungseinheit (70) ein Fehlersignal (128) erzeugt, wenn die übermittelte Teilnehmeradresse (90) bereits an einen an den Feldbus (16) angeschlossenen Busteilnehmer (12, 14, 18 - 24) vergeben ist.

8. Verfahren nach Anspruch 1 oder 2, **dadurch gekennzeichnet, daß** die Verwaltungseinheit (70) Wartungstelegramme (110) in definierten Zeitabständen an alle an den Feldbus (16) angeschlossenen Busteilnehmer (12, 14, 18 - 24) versendet.

9. Verfahren nach einem der Ansprüche 1 bis 8, gekennzeichnet ferner durch die Schritte:
- Überprüfen der Anwesenheit aller aktiv an den Feldbus (16) angeschlossenen Busteilnehmer (12, 14, 18 - 24) anhand einer Sollkonfiguration von Busteilnehmern (12, 14, 18 - 24) sowie anhand von Antworttelegrammen (104) der Busteilnehmer (12, 14, 18 - 24 ) und
- Versenden der Teilnehmeradresse (90) eines als nicht mehr aktiv erkannten Busteilnehmers (12, 14, 18 - 24) als definierte Teilnehmeradresse (90).

10. Verfahren nach einem der Ansprüche 1 bis 9, **dadurch gekennzeichnet, daß** die Verwaltungseinheit (70) ein Fehlersignal (128) erzeugt, wenn mehr als ein Busteilnehmer (12, 14, 18 - 24) das erste Anmeldetelegramm (114) versendet.

11. Verfahren nach einem der Ansprüche 1 bis 10, **dadurch gekennzeichnet, daß** zumindest das erste Anmeldetelegramm (114) sowie das Adreßvergabetelegramm (118) mit jeweils einem Quittungstelegramm (116) beantwortet werden.

12. Steuerungssystem zum sicheren Steuern von sicherheitskritischen Prozessen (28 - 32), mit zumindest einem sicheren Busteilnehmer (12, 14, 18 - 24), der an einen Feldbus (16) angeschlossen ist, wobei der sichere Busteilnehmer (12, 14, 18 - 24) erste Mittel (40) zum Aufnehmen und Auswerten eines Bustelegramms (80) sowie einen Speicher (58; 120) zum Speichern einer dem Busteilnehmer (12, 14, 18 - 24) zugeordneten Teilnehmeradresse (90) aufweist, wobei der Busteilnehmer (12, 14, 18 - 24) zweite Mittel (40, 120; 40, 58) aufweist, um sich unter einer festgelegten Universaladresse (92) bei einer an den Feldbus (16) angeschlossenen Verwaltungseinheit (70) anzumelden, sowie dritte Mittel (42, 54), um ein Adreßvergabetelegramm (118) mit der Teilnehmeradresse (90) aufzunehmen und auszuwerten, wobei die ersten und zweiten Mittel (40, 120; 40, 58) derart ausgebildet sind, daß der sichere Busteilnehmer (12, 14, 18 - 24) ein Anmeldetelegramm (114) mit der festgelegten Universaladresse (92) erst nach Empfang eines definierten Wartungstelegramms (110) versendet.

## Claims

1. Method for configuring a safe bus user (12, 14, 18 - 24) when connecting it to a field bus (16) in a safe control system (10), a defined user address (90) being allocated to said safe bus user (12, 14, 18-24), comprising the following steps:
- sending out a first registration message (114) from said safe bus user (12, 14, 18 - 24) to an administration unit (70) connected to the field bus (16), said first registration message (114) containing a predetermined universal address (92),
- sending out an address allocation message (118) from said administration unit (70) to said safe bus user (12, 14, 18 - 24), said address allocation message (118) containing the defined user address (90), and
- storing said defined user address (90) in a memory (58; 120) of said safe bus user,
- wherein said safe bus user (12, 14, 18 - 24) sends out said first registration message (114) to said administration unit (70) after receiving a defined maintenance message (110).

2. Method according to Claim 1, **characterized in that** said safe bus user (12, 14, 18 - 24), after receiving said address allocation message (118), sends out a second registration message (112) to said administration unit (70), said second registration message (112) containing the defined user address (90).

3. Method according to Claim 1 or 2, **characterized in that** said safe bus user (12, 14, 18 - 24) sends out said first registration message (114) to said administration unit (70) only after said first reception of the defined maintenance message (110), whereas it sends out said second registration message (112) to said administration unit (70) on repeated reception of said defined maintenance message (110).

4. Method according to one of Claims 1 to 3, **characterized in that** said defined maintenance message (110) is sent out only after activation (106) of a special maintenance mode (106) of said administration unit (70).

5. Method according to Claim 4, **characterized in that** said administration unit (70) automatically ends (122) said special maintenance mode after reception of said second registration message (112).

6. Method according to Claim 4 or 5, **characterized in that** said defined user address (90) is transmitted (108) to said administration unit (70) at the beginning of said special maintenance mode.

7. Method according to Claim 6, **characterized in that** said administration unit (70) generates a fault signal (128) if said user address (90) transmitted has already been allocated to a bus user (12, 14, 18 - 24) connected to said field bus (16).

8. Method according to Claim 1 or 2, **characterized in that** said administration unit (70) sends out maintenance messages (110) to all bus users (12, 14, 18 - 24) connected to said field bus (16) at defined time intervals.

9. Method according to one of Claims 1 to 8, further **characterized by** the following steps:
- checking if all the bus users (12, 14, 18-24) actively connected to said field bus (16) are present by means of a nominal configuration of said bus users (12, 14, 18 - 24) and by means of response messages (104) of said bus users (12, 14, 18 - 24), and
- sending out the user address (90) of a bus user (12, 14, 18 - 24) recognized as no longer active as the defined user address (90).

10. Method according to one of Claims 1 to 9, **characterized in that** said administration unit (70) generates a fault signal (128) if more than one bus user (12, 14, 18 - 24) sends out said first registration message (114).

11. Method according to one of Claims 1 to 10, **characterized in that** at least said first registration message (114) and said address allocation message (118) are answered each with an acknowledgment message (116).

12. Control system for safely controlling safety-critical processes (28 - 32), comprising at least one safe bus user (12, 14, 18 - 24) which is connected to a field bus (16), said safe bus user (12, 14, 18 - 24) comprising first means (40) for receiving and evaluating a bus message (80) and a memory (58; 120) for storing a user address (90) allocated to said bus user (12, 14, 18 - 24), wherein said bus user (12, 14, 18 - 24) comprises second means (40, 120; 40, 58) for registering with an administration unit (70) connected to said field bus (16) under a predetermined universal address (92), and third means (42, 54) for receiving and evaluating an address allocation message (118) with said user address (90), said first and second means (40, 120; 40, 58) being constructed in such a manner that said safe bus user (12, 14, 18 - 24) only sends out a registration message (114) with the predetermined universal address (92) after receiving a defined maintenance message (110).

## Revendications

1. Procédé pour configurer une station sécurisée (12, 14, 18 à 24) lors du raccordement à un bus de terrain (16) dans un système de commande sûr (10), dans lequel une adresse de noeud définie (90) est assignée à la station sécurisée (12, 14, 18 à 24), comportant les étapes consistant à :
- envoyer un premier télégramme de demande (114) par la station sécurisée (12, 14, 18 à 24) à une unité de gestion (70) raccordée au bus de terrain (16), le premier télégramme de demande (114) contenant une adresse universelle fixée (92),
- envoyer un télégramme d'affectation d'adresse (118) par l'unité de gestion (70) à la station sécurisée (12, 14, 18 à 24), le télégramme d'attribution d'adresse (118) contenant l'adresse de noeud définie (90), et
- enregistrer l'adresse de noeud définie (90) dans une mémoire (58 ; 120) de la station sécurisée,
- la station sécurisée (12, 14, 18 à 24) envoyant le premier télégramme de demande (114) à l'unité de gestion (70) après la réception d'un télégramme de maintenance défini (110).

2. Procédé selon la revendication 1, **caractérisé en ce que** la station sécurisée (12, 14, 18 à 24) envoie un deuxième télégramme de demande (112) à l'unité de gestion (70) après la réception du télégramme d'affectation d'adresse (118), le deuxième télégramme de demande (112) contenant l'adresse de noeud définie (90).

3. Procédé selon la revendication 1 ou 2, **caractérisé en ce que** la station sécurisée (12, 14, 18 à 24) envoie le premier télégramme de demande (114) à l'unité de gestion (70) seulement après la réception initiale du télégramme de maintenance défini (110), tandis qu'elle envoie le deuxième télégramme de demande (112) à l'unité de gestion (70) lors d'une réception redondante du télégramme de maintenance défini (110).

4. Procédé selon l'une des revendications 1 à 3, **caractérisé en ce que** le télégramme de maintenance défini (110) est envoyé seulement après l'activation (106) d'un mode de maintenance spécifique (106) de l'unité de gestion (70).

5. Procédé selon la revendication 4, **caractérisé en ce que** l'unité de gestion (70) met automatiquement fin (122) au mode de maintenance spécifique après la réception du deuxième télégramme de demande (112).

6. Procédé selon la revendication 4 ou 5, **caractérisé en ce que** l'adresse de noeud définie (90) est transmise (108) à l'unité de gestion (70) au début du mode de maintenance spécifique.

7. Procédé selon la revendication 6, **caractérisé en ce que** l'unité de gestion (70) génère un signal d'erreur (128), quand l'adresse de noeud (90) transmise est déjà affectée à une station (12, 14, 18 à 24) raccordée au bus de terrain (16).

8. Procédé selon la revendication 1 ou 2, **caractérisé en ce que** l'unité de gestion (70) envoie, à des intervalles de temps définis, des télégrammes de maintenance (110) à toutes les stations (12, 14, 18 à 24) raccordées au bus de terrain (16).

9. Procédé selon l'une des revendications 1 à 8, **caractérisé en outre par** les étapes consistant à :
- surveiller la présence de toutes les stations (12, 14, 18 à 24) en activité raccordées au bus de terrain (16) à l'appui d'une configuration nominale des stations (12, 14, 18 à 24) ainsi qu'à l'appui de télégrammes de réponse (104) des stations (12, 14, 18 à 24), et
- envoyer l'adresse de noeud (90) d'une station (12, 14, 18 à 24) reconnue comme n'étant plus en activité, en tant qu'adresse de noeud définie (90).

10. Procédé selon l'une des revendications 1 à 9, **caractérisé en ce que** l'unité de gestion (70) génère un signal d'erreur (128), quand plus d'une station (12, 14, 18 à 24) envoie le premier télégramme de demande (114).

11. Procédé selon l'une des revendications 1 à 10, **caractérisé en ce qu'**au moins le premier télégramme de demande (114) ainsi que le télégramme d'affectation d'adresse (118) sont acquittés respectivement par un télégramme d'accusé de réception (116).

12. Système de commande pour commander de façon sécurisée des processus (28 à 32) critiques sur le plan de la sécurité, avec au moins une station sécurisée (12, 14, 18 à 24), qui est raccordée à un bus de terrain (16), la station sécurisée (12, 14, 18 à 24) comportant des premiers moyens (40) pour prendre en charge et exploiter un télégramme de bus (80) ainsi qu'une mémoire (58 ; 120) pour enregistrer une adresse de noeud (90) assignée à la station (12, 14, 18 à 24), la station (12, 14, 18 à 24) comportant des deuxièmes moyens (40, 120 ; 40, 58) pour se déclarer sous une adresse universelle fixée (92) auprès d'une unité de gestion (70) raccordée au bus de terrain (16), ainsi que des troisièmes moyens (42, 54) pour prendre en charge et exploiter un télégramme d'affectation d'adresse (118) comportant l'adresse de noeud (90), les premiers et deuxièmes moyens (40, 120 ; 40, 58) étant réalisés de telle manière que la station sécurisée (12, 14, 18 à 24) envoye un télégramme de demande (114) comportant l'adresse universelle fixée (92) seulement après la réception d'un télégramme de maintenance défini (110).
